# EUROPEAN PATENT SPECIFICATION

(11) **EP 4 161 850 B1**
(45) Date of publication and mention of the grant of the patent: **18.10.2023**
(21) Application number: 21733722.9
(22) Date of filing: 29.05.2021
(51) Int. Cl.: B65G 1/04

(54) **A STORAGE SYSTEM FOR STORING STACKS OF BOARDS IN STORAGE ROWS, FOR USE IN FACTORIES FABRICATING BOARDS**
LAGERSYSTEM ZUM LAGERN VON BRETTSTAPELN IN LAGERREIHEN ZUR VERWENDUNG IN FABRIKEN ZUR HERSTELLUNG VON BRETTERN
SYSTÈME DE STOCKAGE POUR STOCKER DES PILES DE PANNEAUX EN RANGÉES DE STOCKAGE, DESTINÉ À ÊTRE UTILISÉ DANS DES USINES DE FABRICATION DE PANNEAUX

(30) Priority: 05.06.2020 FI 20205588
(43) Date of publication of application: 12.04.2023
(73) Proprietor: Dieffenbacher Panelboard Oy, 15560 Nastola (FI)
(72) Inventor: MÄNNIKKÖ, Ari, 15560 Nastola (FI)
(74) Representative: Hartdegen, Helmut
(86) International application number: PCT/EP2021/064470
(87) International publication number: WO 2021/244995

(56) References cited:
- EP-A1- 1 581 705
- EP-A2- 0 609 757
- WO-A1-98/04482

## Description

### OBJECT OF THE INVENTION

The object of the present invention is a storage system for storing stacks of board on storage rows, for use in factories fabricating boards, especially OSB, MDF, or particle boards, wherein each storage row comprises three parallel elongated supports, between which are spaces for satellite wagons transporting board stacks.

Generally speaking, wood-based boards manufactured on a continuous-action press line are stored for a certain time in intermediate storage before the downstream work phases, such as sanding and sawing.

### BACKGROUND OF THE INVENTION

The typical mass of large stacks in factories fabricating boards, especially OSB, MDF, or particle boards, is 40-80 tons. The typical stack height is 3-5 m, width 1.8-3.6 m and length 5-9 m. The stacks in the storage system that is the object of the invention are transported on two wagons running on rails under the stack in the longitudinal direction of the storage, which wagons transfer the stack to rows of the storage resting on three longitudinal supports. These wagons moving in the longitudinal direction are herein called satellite wagons and they always operate in pairs. The transfer of stacks to a storage row and the fetching of stacks from a storage row occurs in such a way that a satellite wagon pair lifts a stack from the bottom surface of the stack, such that the stack detaches from its longitudinal supports, and transports the stack to a storage row and lowers the stack onto the longitudinal supports in the storage or, when fetching from the storage, onto the supports on the main wagon. The moving of a satellite wagon pair in a crosswise direction, i.e. from one longitudinal row to another longitudinal row, occurs by driving the satellite wagon pair onto the main wagon, which then transports the satellite wagon pair to the next worksite, i.e. to some other longitudinal row.

Such storage systems are well known in the state of the art and e.g. shown in WO 98 04482 A1 or EP 0 609 757 A2, which both disclose a storage system according to the preamble of claim 1.

In a structure according to what is known in the art, the parts of the longitudinal supports of the storage area bearing a continuous longitudinal load are either of steel construction or of ferroconcrete construction. The top surface of the supports must be very precisely flat so that deformations do not occur in the boards being stored in a stack. Generally, a typical flatness requirement for the top surface of the longitudinal supports of the storage is a few millimeters, e.g. ±2 mm. It is difficult to achieve such high accuracy by using the steel beams generally available, such as I beams, HEA beams and HEB beams, because their normal manufacturing imprecision is worse than what is required. Likewise, ferroconcrete structures cast in situ according to prior art have the same requirement for precision, which is difficult to achieve.

In both structures according to prior art, the part bearing a continuous longitudinal load must be covered with some other material, e.g. with MDF boards, which must be adjusted throughout its length to conform to the flatness requirement. Adjustment can be made e.g. by using washers of different thicknesses. This work, of course, is slow and uneconomic.

### SUMMARY OF THE INVENTION

The aim of the present invention is to provide a new type of storage system for large stacks, wherein the longitudinal supports bearing a continuous load can be fabricated inexpensively, can be efficiently transported when packed in a shipping container, and can be easily installed with the required precision. The aim is solved by a storage system according to claim 1. According to the invention, the horizontal load-bearing part of a support is formed from one or more glued laminated beams.

One embodiment of the storage system according to the invention is characterized in that the horizontal load-bearing part of a support is formed from two parallel glued laminated beams.

Another embodiment of the storage system according to the invention is characterized in that the glued laminated beams are situated at a distance from each other.

Yet another embodiment of the storage system according to the invention is characterized in that between the glued laminated beams are steel parts on which the glued laminated beams are supported from their opposite side surfaces and to which the glued laminated beams are fastened.

Yet another embodiment of the storage system according to the invention is characterized in that between the glued laminated beams are ferroconcrete parts on which the glued laminated beams are supported from their opposite side surfaces and to which the glued laminated beams are fastened.

Yet another embodiment of the storage system according to the invention is characterized in that the horizontal load-bearing part of a support is formed from three parallel glued laminated beams.

Yet another embodiment of the storage system according to the invention is characterized in that the centermost glued laminated beam of the three parallel glued laminated beams is shallower in the height of its cross-section than the glued laminated beams at the edges.

Yet another embodiment of the storage system according to the invention is characterized in that the glued laminated beams are dimensioned to be suitable in their length for a shipping container.

Yet another embodiment of the storage system according to the invention is characterized in that the glued laminated beams have on the top surface and bottom surface one or more parts of the beam, the parts having a strength that is greater than the middle layers.

Yet another embodiment of the storage system according to the invention is characterized in that the two topmost and two bottommost layers of a glued laminated beam are made of wood, the strength of the wood being greater than the strength of the wood of the middle layers.

Some of the advantages of the invention that can be mentioned is that the new type of support structure reduces costs because the combined length of the longitudinal supports of the storage area is significantly large. In addition, costs can be optimized by using glued laminated wood in which the strongest parts of the glued laminated wood are on the top and bottom surfaces of the beam, in which case cheaper wood of a lower strength grade can be used in the middle part of the beam. The stress in a beam bearing a continuous load is, of course, greatest in the top surface and bottom surface of the beam.

A further advantage of the invention that can be mentioned is that by means of a glued laminated beam the top surface of a support can be made sufficiently flat without extra procedures. In addition, installation of the supports according to the invention is easy and they can be transported advantageously in a shipping container.

### LIST OF FIGURES

In the following, the invention will be described in more detail by the aid of some preferred embodiments with reference to the attached drawings, wherein:
- Fig. 1: presents a storage system in which the invention can be utilized.
- Fig. 2: presents a storage system as viewed from the direction of the storage rows.
- Fig. 3: presents a magnified detail A of Fig. 2.
- Fig. 4: presents a storage system as viewed from the direction of the storage rows.
- Fig. 5: presents a magnified detail B of Fig. 4.
- Fig. 6: presents a side view of a storage row according to the invention, provided with three supports.
- Fig. 7: presents a C-C section of Fig. 6.
- Fig. 8: presents a magnified detail A of Fig. 7.
- Fig. 9: presents an oblique top view of a storage row formed from three supports.
- Fig. 10: presents a magnification of the detail B of Fig. 9.

### DETAILED DESCRIPTION OF THE INVENTION

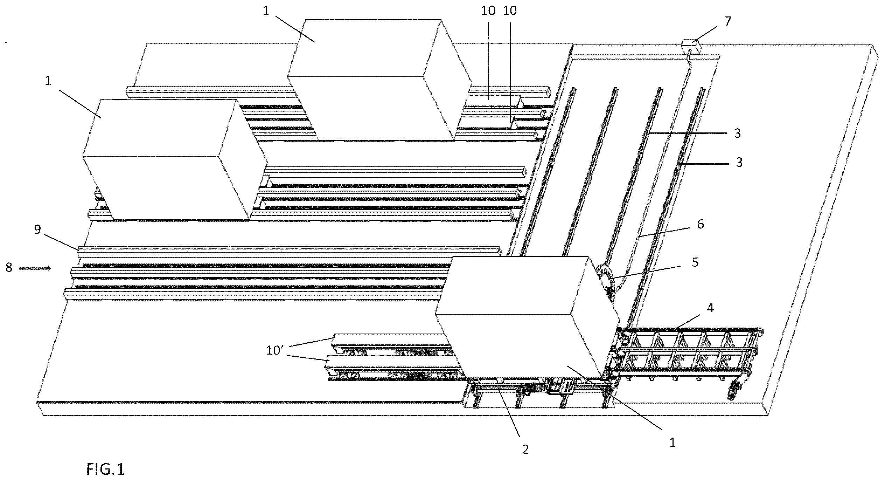

Fig. 1 thus presents an overview of a storage system for a factory fabricating boards, especially OSB, MDF, or particle boards. The board stacks, of which there are three, are marked with the reference number 1. There can, of course, be more board stacks but for the sake of clarity not all are presented. The board stack at the bottom edge of Fig. 1 is on top of a wagon moving in a crosswise direction, i.e. the main wagon 2. The main wagon moves along rails 3. This direction of movement is therefore called the crosswise direction.

On the right-hand side of the main wagon 2 the figure presents a conveyor 4, along which the board stacks come into the storage and exit it. The current supply of the main wagon current takes place via the cable 6 of the current supply unit 7. When the crosswise wagon moves towards the current supply unit 7, the cable 6 winds onto the cable reel 5. Correspondingly, when the main wagon moves away from the current supply unit 7, the cable 6 unwinds from the cable reel 5.

Fig. 1 presents three longitudinal storage rows 8, each of which is formed from three longitudinal supports 9. There can, of course, be considerably more of these storage rows 8 than three. Additionally, they can be on both sides of the main wagon 2. They are presented here now only on the left-hand side of the main wagon 2 when looking at the figure.

Fig. 1 also presents a wagon pair comprising two wagons 10 moving side-by-side in a longitudinal direction. They are referred to hereinafter as satellite wagons, and they lift and move board stacks from below. Presented in the top part of Fig. 1 is a satellite wagon pair that is just going under or coming away from a stack 1. The satellite wagon pair 10 is able to lift a stack into the air and to transfer it either from the main wagon 2 onto a storage row 8 or from a storage row 8 onto the main wagon 2. A satellite wagon pair 10 is thus disposed in such a way that one satellite wagon is located between the centermost support 9 and one of the outermost supports 9. Correspondingly, the second satellite wagon is located between the centermost support 9 and the other outermost support 9. Therefore, there are always two satellite wagons side by side and they are called a satellite wagon pair 10.

Fig. 1 also presents a second pair of satellite wagons, which can be seen slightly under the stack 1 on the left-hand side. The main wagon 2 can therefore be arranged to serve more than one satellite wagon pair 10. This second satellite wagon pair is not necessarily needed but, particularly in very large storages, it adds capacity. At the bottom edge of Fig. 1 a satellite wagon pair 10' can also be seen, which can be a back-up. In other words, one satellite wagon 10' or both satellite wagons 10' are taken into use from it if a defect occurs in the regular satellite wagons 10 or they otherwise need servicing. In the storage system according to the invention, commissioning of the replacement satellite wagon 10' is easy without requiring installation work or connection work.

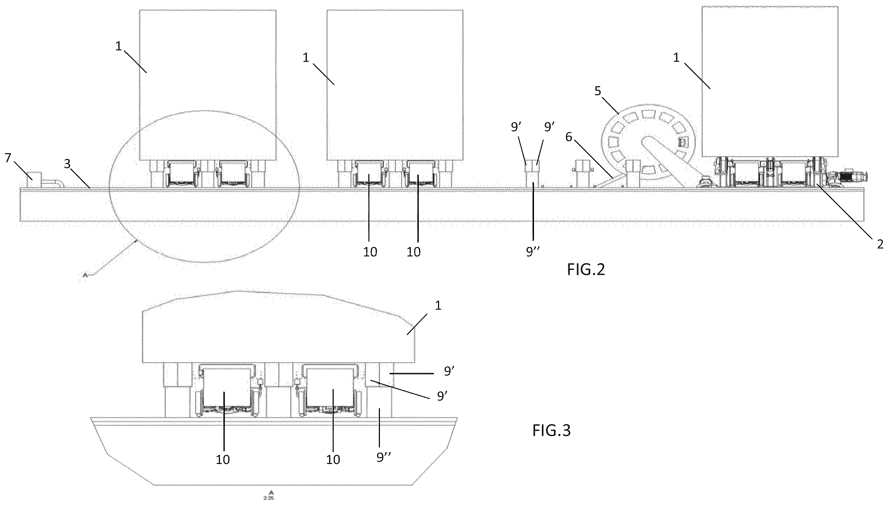

Fig. 2 presents a storage system as viewed in the direction of the storage rows 8. The figure shows how the board stacks 1 are on top of the supports 9 (marked here 9', 9"). Thus, each board stack 1 is supported by three supports 9. The satellite wagons 10 are visible between the supports 9. In this figure more than one satellite wagon pairs are presented, but as presented earlier there might be one or more pairs of them. On the right-hand edge of Fig. 2 is the main wagon 2, of which the cable 6 and cable reel 5 are visible. A board stack 1 is also on top of the main wagon.

Fig. 3 shows in more detail one possible structure of a support according to the invention. The glued laminated beams, of which in this embodiment there are two side by side on each support, are presented with the reference number 9'. Although not clearly shown in Figs. 2 and 3, between the glued laminated beams 9' are e.g. steel parts, such as steel plates, which are supported on the support structure 9'' (or leg) of the support. The glued laminated beams 9' are fastened into position from their opposite sides by means of steel plates in a manner described later in this application. The support structure 9" of a support is preferably of concrete material or ferroconcrete material.

The glued laminated beams 9' are fastened into position in such a way that their height when fastened into position is typically greater than their width. Commercially available glued laminated beams can be used in the invention and the dimensions can be individually selected according to need.

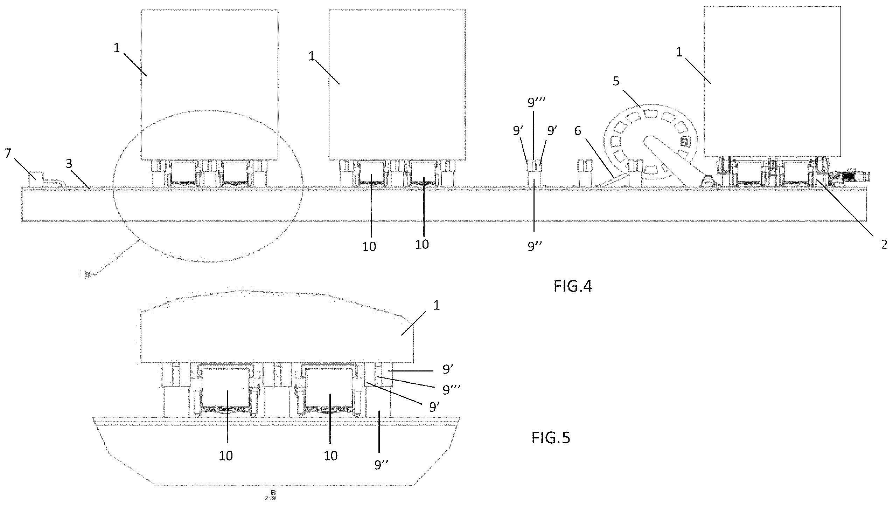

Figs. 4 and 5 present an otherwise similar storage system to that in Figs. 2 and 3, but the structure of the supports is different. Only the structure of the supports, therefore, is described with respect to these drawings. In the embodiment according to Figs. 4 and 5, there are again two glued laminated beams 9' one beside the other on each support. Between them is a ferroconcrete part 9''', which is thus wider than the steel plate of the previous embodiment. The support structure 9'' is again preferably of concrete or ferroconcrete, in which case the part 9‴ extending between the glued laminated beams 9' is the same structure as the support structure 9".

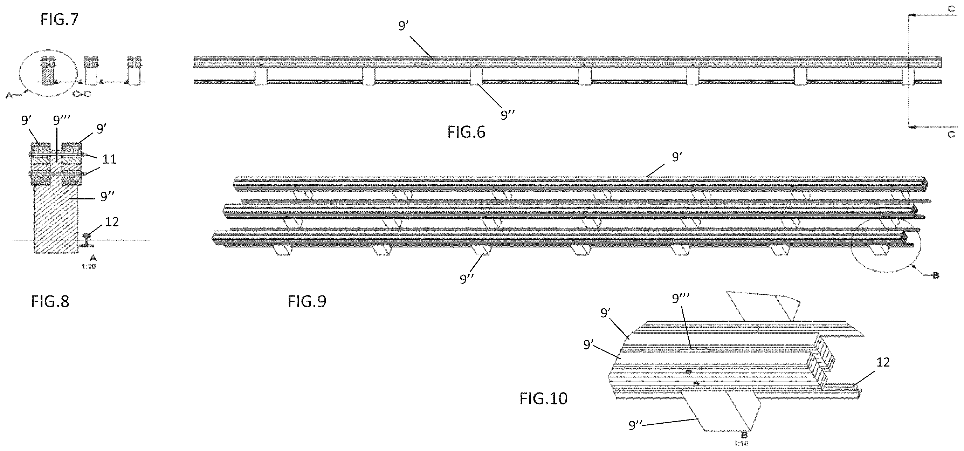

Fig. 6 presents a side view of the outermost support 9', 9'' of a storage row. Fig. 7 presents a C-C section of Fig. 6 while Fig. 8 presents a magnified detail A of Fig. 7. This figure also shows the structure of a glued laminated beam as well as one possible way of fastening it.

The glued laminated beams 9' are thus placed against the ferroconcrete part 9''' and fastened with bolts 11 extending through the whole structure. The structure of a glued laminated beam, wherein the top and bottom layers are of stronger wood than the middle layers, can also be seen from this cross-sectional drawing. They are also of slightly thinner wood than the wood of the middle layers. This structure is seen more precisely in Fig. 10, which presents a magnification of the detail B of Fig. 9. In the embodiment presented by Fig. 10 the glued laminated beam 9' comprises eight layers, one on top of the other, the layers being glued to each other, the topmost two and bottommost two layers of which are of stronger wood than the four middle layers. They are also slightly thinner layers. This is, of course, only one possible implementation method, but it is advantageous to use a glued laminated beam having top and bottom layers of stronger wood, because these layers are subjected to greater stresses. The middle layers can be of less expensive wood of lower strength.

Fig. 9 presents one storage row comprising three elongated supports. The support structures 9" are arranged at suitable intervals under the glued laminated beams.

One rail of the satellite wagon is marked with the reference number 12. Each satellite wagon, of course, has two rails 12 between the longitudinal supports.

It is obvious to the person skilled in the art that the invention is not limited to the embodiments presented above, but that it can be varied within the scope of the claims presented below. Thus, the horizontal load-bearing part of a support can also be formed from three parallel glued laminated beams. In this case, the centermost glued laminated beam of the three parallel glued laminated beams can be shallower in the height of its cross-section than the glued laminated beams at the edges. Furthermore, it is advantageous to dimension the glued laminated beams to be suitable in length for a shipping container.

## Claims

1. A storage system for storing board stacks (1) in storage rows (8), for use in factories fabricating boards, especially OSB, MDF, or particle boards, wherein each storage row comprises three parallel elongated supports (9), which are supported on top of support structures (9") arranged at a distance from each other, and between which supports (9) are spaces for satellite wagons (10) transporting board stacks, **characterized in that** the horizontal load-bearing part of a support (9) is formed from one or more glued laminated beams (9').

2. A storage system according to claim 1, **characterized in that** the horizontal load-bearing part of a support (9) is formed from two parallel glued laminated beams (9').

3. A storage system according to claim 2, **characterized in that** the glued laminated beams (9') are situated at a distance from each other.

4. A storage system according to claim 3, **characterized in that** between the glued laminated beams (9') are steel parts on which the glued laminated beams (9') are supported from their opposite side surfaces and to which the glued laminated beams are fastened.

5. A storage system according to claim 3, **characterized in that** between the glued laminated beams (9') are ferroconcrete parts (9‴) on which the glued laminated beams (9') are supported from their opposite side surfaces and to which the glued laminated beams are fastened.

6. A storage system according to claim 1, **characterized in that** the horizontal load-bearing part of a support is formed from three parallel glued laminated beams (9').

7. A storage system according to claim 6, **characterized in that** the centermost glued laminated beam of the three parallel glued laminated beams (9') is shallower in the height of its cross-section than the glued laminated beams at the edges.

8. A storage system according to any of claims 1-7, **characterized in that** the glued laminated beams (9') have on the top surface and bottom surface one or more parts of the beam, the parts having a strength that is greater than the middle layers.

9. A storage system according to claim 8, **characterized in that** the two topmost and two bottommost layers of a glued laminated beam (9') are made of wood, the strength of the wood being greater than the wood of the middle layers.

## Patentansprüche

1. Lagersystem zum Lagern von Brettstapeln (1) in Lagerreihen (8) zur Verwendung in Fabriken zur Herstellung von Brettern, insbesondere OSB, MDF oder Spanplatten, wobei jede Lagerreihe drei parallele längliche Träger (9) umfasst, die oben auf Trägerstrukturen (9") getragen werden, die in einem Abstand voneinander angeordnet sind, und wobei zwischen den Trägern (9) Räume für Satellitenwagen (10) sind, die Brettstapel transportieren, **dadurch gekennzeichnet, dass** der horizontale lasttragende Teil eines Trägers (9) aus einem oder mehreren verleimten Balken (9') gebildet ist.

2. Lagersystem nach Anspruch 1, **dadurch gekennzeichnet, dass** der horizontale lasttragende Teil eines Trägers (9) aus zwei parallelen verleimten Balken (9') gebildet ist.

3. Lagersystem nach Anspruch 2, **dadurch gekennzeichnet, dass** sich die laminierten Balken (9') in einem Abstand voneinander befinden.

4. Lagersystem nach Anspruch 3, **dadurch gekennzeichnet, dass** sich zwischen den laminierten Balken (9') Stahlteile befinden, auf denen die laminierten Balken (9`) von ihren gegenüberliegenden Seitenflächen getragen werden und an denen die laminierten Balken befestigt sind.

5. Lagersystem nach Anspruch 3, **dadurch gekennzeichnet, dass** sich zwischen den laminierten Balken (9') Stahlbetonteile (9‴) befinden, auf denen die laminierten Träger (9') von ihren gegenüberliegenden Seitenflächen getragen werden und an denen die laminierten Balken befestigt sind.

6. Lagersystem nach Anspruch1, **dadurch gekennzeichnet, dass** der horizontale lasttragende Teil eines Trägers aus drei parallelen laminierten Balken (9`) gebildet ist.

7. Lagersystem nach Anspruch 6, **dadurch gekennzeichnet, dass** der mittlere laminierte Balken der drei parallelen laminierten Balken (9') eine flachere Höhe im Querschnitt aufweist als die laminierten Balken an den Rändern.

8. Lagersystem nach einem der Ansprüche 1-7, **dadurch gekennzeichnet, dass** die laminierten Balken (9') auf der oberen Fläche und der unteren Fläche ein oder mehrere Teile des Balkens aufweisen, wobei die Teile eine Festigkeit aufweisen, die größer als die der mittleren Schichten ist.

9. Lagersystem nach Anspruch 8, **dadurch gekennzeichnet, dass** die zwei oberen und zwei unteren Schichten eines laminierten Balkens (9') aus Holz bestehen, wobei die Festigkeit des Holzes größer als des Holzes der mittleren Schichten ist.

## Revendications

1. Système de stockage pour stocker des piles de panneaux (1) dans des rangées de stockage (8), à utiliser dans des usines de fabrication de panneaux, notamment des panneaux OSB, MDF ou de particules, dans lequel chaque rangée de stockage comprend trois supports (9) allongés parallèles, qui sont supportés sur des structures de support (9") agencées à une distance les unes des autres, et entre lesquels supports (9) se trouvent des espaces pour des wagons satellites (10) transportant des piles de panneaux, **caractérisé en ce que** la partie porteuse horizontale d'un support (9) est formée d'une ou de plusieurs poutres lamellées collées (9').

2. Système de stockage selon la revendication 1, **caractérisé en ce que** la partie porteuse horizontale d'un support (9) est formée de deux poutres lamellées collées (9') parallèles.

3. Système de stockage selon la revendication 2, **caractérisé en ce que** les poutres lamellées collées (9') sont situées à une distance l'une de l'autre.

4. Système de stockage selon la revendication 3, **caractérisé en ce qu'**entre les poutres lamellées collées (9') se trouvent des parties en acier sur lesquelles les poutres lamellées collées (9') sont supportées à partir de leurs surfaces latérales opposées et auxquelles les poutres lamellées collées sont fixées.

5. Système de stockage selon la revendication 3, **caractérisé en ce qu'**entre les poutres lamellées collées (9') se trouvent des parties en béton armé (9‴) sur lesquelles les poutres lamellées collées (9') sont supportées à partir de leurs surfaces latérales opposées et auxquelles les poutres lamellées collées sont fixées.

6. Système de stockage selon la revendication 1, **caractérisé en ce que** la partie porteuse horizontale d'un support est formée de trois poutres lamellées collées (9') parallèles.

7. Système de stockage selon la revendication 6, **caractérisé en ce que** la poutre lamellée collée la plus centrale des trois poutres lamellées collées (9') parallèles est moins profonde dans la hauteur de sa coupe que les poutres lamellées collées au niveau des bords.

8. Système de stockage selon l'une quelconque des revendications 1 à 7, **caractérisé en ce que** les poutres lamellées collées (9') présentent sur la surface haute et la surface basse une ou plusieurs parties de la poutre, les parties ayant une résistance qui est supérieure aux couches intermédiaires.

9. Système de stockage selon la revendication 8, **caractérisé en ce que** les deux couches les plus hautes et les deux couches les plus basses d'une poutre lamellée collée (9') sont en bois, la résistance du bois étant supérieure à celle du bois des couches intermédiaires.
